# EUROPEAN PATENT APPLICATION

(11) **EP 4 096 074 A1**
(43) Date of publication of application: **30.11.2022**
(21) Application number: 21744236.7
(22) Date of filing: 15.01.2021
(51) Int. Cl.: H02K 15/02, H01F 41/02

(54) **ADHESIVE COATING DEVICE, LAMINATED IRON CORE MANUFACTURING DEVICE COMPRISING SAID ADHESIVE COATING DEVICE, AND METHOD FOR MANUFACTURING LAMINATED IRON CORE**

(30) Priority: 20.01.2020 JP 2020007026
(71) Applicant: Tanaka Seimitsu Kogyo Co., Ltd., Toyama-shi, Toyama 939-2617 (JP)
(72) Inventor: KUROSAKI, Eiichi, Toyama-shi, Toyama 939-2617 (JP)
(74) Representative: Witte, Weller & Partner Patentanwälte mbB
(86) International application number: PCT/JP2021/001202
(87) International publication number: WO 2021/149604

(57) **Abstract**

The present invention provides an adhesive application device configured to apply a necessary and sufficient amount of an adhesive to a thin steel strip without causing the problem of increase in the equipment cost. The present invention also provides an apparatus for producing a laminated steel core having the adhesive application device. The present invention further provides a method for producing a laminated steel core. The adhesive application device comprises adhesive application devices (3), (4) that are integrated into a single process, wherein the adhesive application devices (3), (4) are configured to independently apply an adhesive to different locations on the same surface of a thin steel strip (2) at the same or different timings.

## Description

### TECHNICAL FIELD

The present invention relates to an adhesive application device, an apparatus for producing a laminated steel core having the adhesive application device, and a method for producing a laminated steel core.

The present invention relates to an adhesive application device, an apparatus for producing a laminated steel core having the adhesive application device, and a method for producing a laminated steel core. In particular, the present invention relates to an adhesive application device for applying an adhesive to a thin steel strip, an apparatus for producing a laminated steel core by stacking steel core sheets having a predetermined shape that are punched out from a thin steel strip to which an adhesive has been applied using the adhesive application device, and a method for producing a laminated steel core.

### BACKGROUND ART

Laminated steel cores for rotating electric machines are generally manufactured from an electromagnetic steel hoop (thin steel strip) as a starting material by feeding the thin steel strip to a progressive die assembly. In the die assembly, the thin steel strip is subjected to progressive punching operation to create a predetermined shape, such as pilot holes, slots and inner teeth, thereby producing steel core sheets in a sequential manner. Then, a predetermined number of the steel core sheets are stacked on top of one another and bonded together to form a laminated steel core. The steel core sheets are conventionally assembled together by lamination interlocking, in which steel core sheets are provided with projections and recesses for interlocking, and stacked on top of one another and interlocked together under pressure. Alternatively, the steel core sheets are assembled together by lamination welding, in which steel core sheets are stacked on top of one another and welded together by laser. However, these lamination techniques suffer from the drawback of deterioration of the magnetic properties at the interlocking locations or the welded locations. Under these circumstances, lamination bonding has been widely proposed as an alternative technique, in which an adhesive is applied to the surface of a thin steel strip in a die assembly, and steel core sheets are punched out from the thin steel strip and are stacked on top of one another and bonded together to form a laminated steel core.

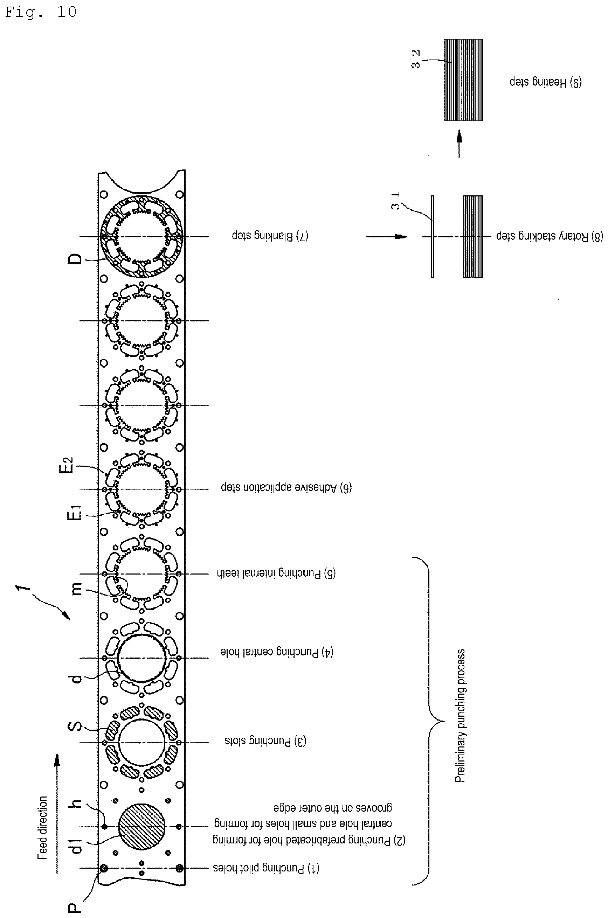

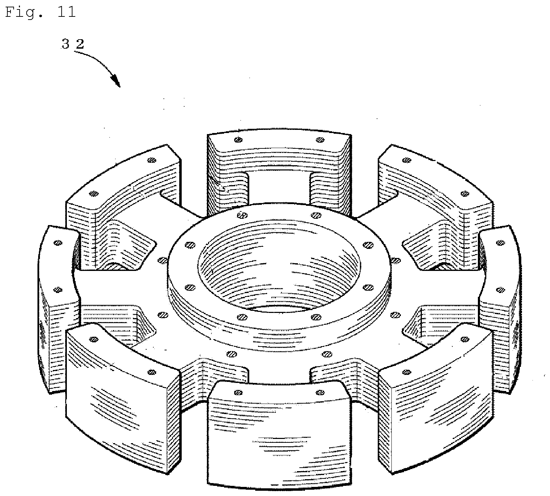

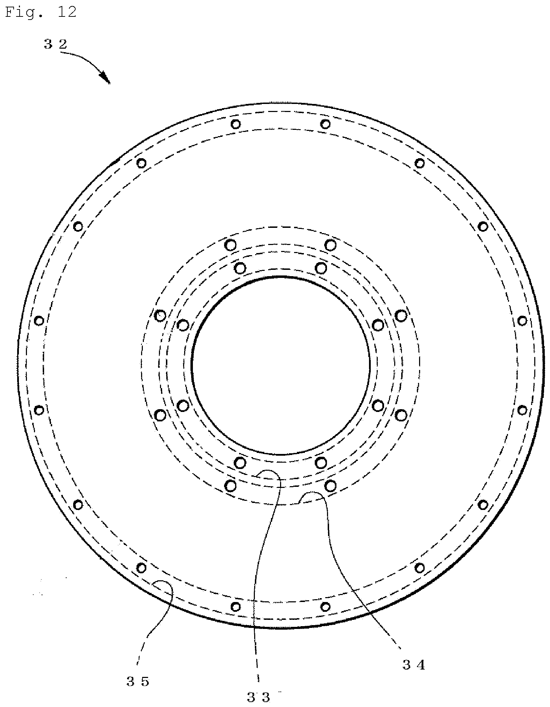

For example, Patent literature 1 discloses an apparatus for producing a laminated steel core. In the production process of a laminated steel core formed from a plurality of steel core sheets 31 as illustrated in Fig. 10 attached hereto, a hoop W is subjected to preliminary punching process to sequentially create (1) pilot holes P, (2) a prefabricated hole d1 for forming the central hole of a steel core sheet 31, (3) slots S, (4) the central hole d of the steel core sheet 31, and (5) internal teeth m, thereby creating the basic shape of the steel core sheet 31 except for the external shape. The hoop is then successively subjected to (6) adhesive application step, (7) blanking step, (8) rotary stacking step, and (9) heating step. When the laminated steel core 32 has different cross sections depending on the position of the slice as shown in Fig. 11, the amount of the adhesive applied to the steel core sheet 31 should be adjusted to an appropriate amount according to the bonding strength required for the applied area of the laminated steel core 32. To this end, the apparatus for producing a laminated steel core is provided with first to third adhesive storage grooves 33 to 35 as shown in Fig. 12, and supply of the adhesive to the second adhesive storage groove 34 is intermittently stopped.

Patent literature 2 discloses an apparatus for producing a motor comprising a rotor and a stator. In the production process of the motor using the apparatus, rotor cores are punched out from a rolled electrical steel sheet, stacked on top of one another, and secured together by interlocking to produce the rotor. Stator cores are also punched out from the rolled electrical steel sheet, stacked on top of one another, and secured together by interlocking.

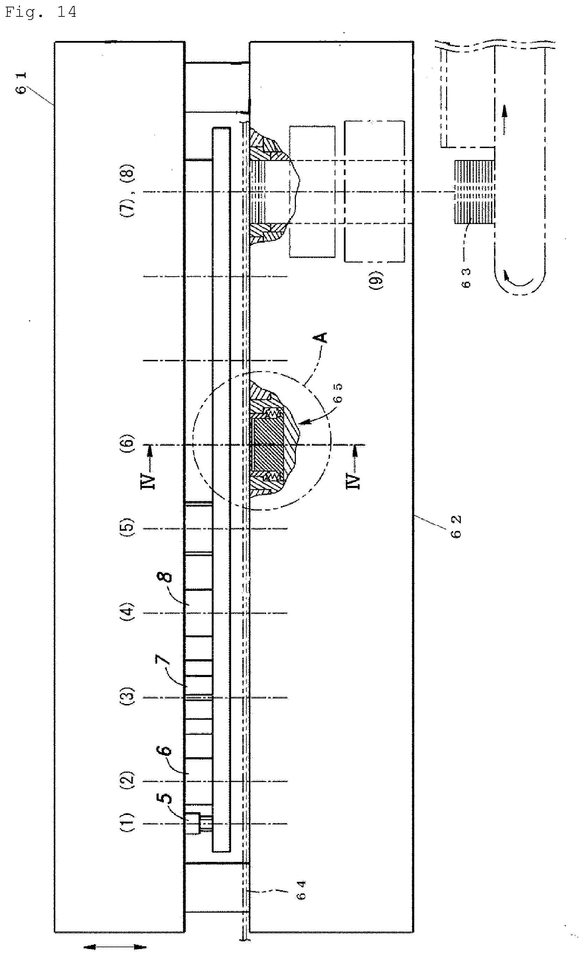

Patent literature 3 discloses an apparatus for producing a laminated steel core. In the production process of a laminated steel core formed from a plurality of steel core sheets using the apparatus as shown in Fig. 14, a thin steel strip 64 is punched to sequentially create (1) pilot holes, (2) a prefabricated hole for forming the central hole of a steel core sheet and small holes for forming grooves on the outer edge of the steel core sheet, (3) slots, (4) the central hole of the steel core sheet, and (5) internal grooves (teeth), thereby creating the basic shape of the steel core sheet except for the external shape. The thin steel strip is then successively subjected to (6) adhesive application step, (7) blanking step, (8) rotary stacking step, and (9) heating step. In the figure, the numeral 61 denotes an upper die, the numeral 62 denotes a lower die, and the numeral 63 denotes the laminated steel core. The apparatus for producing a laminated steel core comprises an adhesive application device 65 within the lower die 62. The adhesive application device 65 is used to apply an adhesive to the lower surface of the thin steel strip 64 and has an elevating unit therein.

### CITATION LIST

### PATENT LITERATURE

Patent literature 1: WO 2016/0719433
Patent literature 2: JP 2005-65479 A
Patent literature 3: JP 2009-124828 A

### SUMMARY OF INVENTION

### TECHNICAL PROBLEM

The apparatus for producing a laminated steel core as disclosed in Patent literature 1 suffers from a time lag between when the operator stops or restarts the supply of the adhesive and when the supply of the adhesive is actually stopped or restarted. Due to this, the adhesive may be applied to an area not requiring application of the adhesive, or shortage of the adhesive may occur on an area requiring application of the adhesive. Some amount of the adhesive may be wasted.

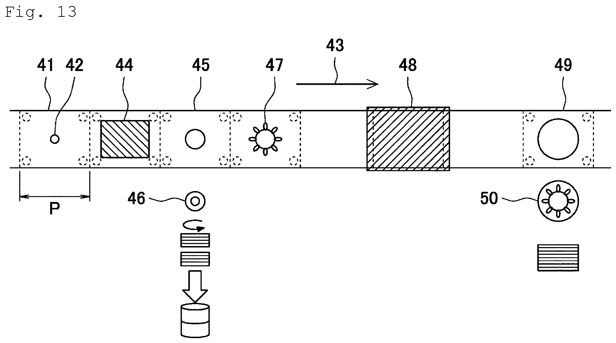

In the production process using the apparatus for producing a motor as disclosed in Patent literature 2, when the rotor cores and the stator cores are laminated not by interlocking but by adhesion bonding, the production process is carried out as shown in Fig. 13. In particular, as shown in the figure, a blank 42 is punched out from a thin steel strip 41, and the thin steel strip 41 is transferred in the direction indicated by the arrow 43 at a feed pitch P. An adhesive for rotor cores is then applied to the lower surface of the thin steel strip 41 using a dispense unit 44 configured to dispense the adhesive for rotor cores. A rotor core 46 is blanked out from the thin steel strip 41, and stacked on another rotor core 46 in a rotor core blanking and laminating step 45. Openings 47 of a stator core are then punched in the thin steel strip 41, and an adhesive for stator cores is applied to the lower surface of the thin steel strip 41 using a dispense unit 48 configured to dispense the adhesive for stator cores. A stator core 50 is blanked out from the thin steel strip 41, and stacked on another stator core 50 in a stator core blanking and laminating step 49. By a way of illustration, after rotor cores 46 are stacked to about half of the thickness of the laminated stator cores 50, the rotor block is rotated at any given angle and stacked on another rotor block prepared by stacking rotor cores 46 to about half of the thickness of the laminated stator cores 50. In this process, a cycle with no need of adhesive application to the thin steel strip will occur every time when rotor cores 46 are stacked to about half of the thickness of the laminated stator cores 50. Accordingly, at least two adhesive application devices have to be installed, each dedicated for the rotor cores or stator cores, so that adhesive application to the thin steel strip is stopped at different timings.

The apparatus for producing a laminated steel core as disclosed in Patent literature 3 comprises an adhesive application device within the lower die, and the adhesive application device has an elevating unit therein. Due to this configuration, the die is relatively large, and high maintenance cost of the apparatus may be required.

The present invention relates to an improved device and method to solve the above technical problems in the conventional art. An object of the invention is to provide an adhesive application device configured to apply a necessary and sufficient amount of an adhesive to a thin steel strip without causing the problem of increase in the equipment cost. Another object of the invention is to provide an apparatus for producing a laminated steel core having the adhesive application device. Yet another object of the invention is to provide a method for producing a laminated steel core.

### SOLUTION TO PROBLEM

A first aspect of the invention of the present application for solving the above problems is directed to an adhesive application device comprising a plurality of adhesive application devices that are integrated into a single process, wherein the plurality of adhesive application devices are configured to independently apply an adhesive to a thin steel strip.

A second aspect of the invention of the present application is directed to the adhesive application device according to the first aspect of the invention, wherein the plurality of adhesive application devices comprise an inner adhesive application device and an outer adhesive application device.

A third aspect of the invention of the present application is directed to the adhesive application device according the first aspect of the invention, wherein the adhesive application device further comprises an elevating and lowering mechanism configured to elevate and lower the plurality of adhesive application devices independently.

A forth aspect of the invention of the present application is directed to the adhesive application device according to the second aspect of the invention, wherein the adhesive application device further comprises an elevating and lowering mechanism configured to elevate and lower the inner and outer adhesive application devices independently.

A fifth aspect of the invention of the present application is directed to the adhesive application device according to any one of the first to fourth aspects of the invention, wherein the tips of the adhesive dispense nozzles of the adhesive application device are inwardly spaced apart from the surface of the thin steel strip abutting the adhesive application device.

A sixth aspect of the invention of the present application is directed to the adhesive application device according to any one of the first to fifth aspects of the invention, wherein the adhesive application device is disposed at a location other than a die.

A seventh aspect of the invention of the present application is directed to the adhesive application device according to the sixth aspect of the invention, wherein the adhesive application device further comprises an elevating and lowering mechanism configured to elevate and lower the thin steel strip.

An eighth aspect of the invention of the present application is directed to the adhesive application device according to any one of the third to seventh aspects of the invention, wherein the adhesive application device further comprises a shock absorber for attenuating the impact of the elevating and lowering movement of the adhesive application device.

A ninth aspect of the invention of the present application is directed to the adhesive application device according to any one of the first to eighth aspects of the invention, wherein the adhesive application device further comprises a sensor for sensing the application of the adhesive to the thin steel strip.

A tenth aspect of the invention of the present application is directed to the adhesive application device according to any one of the first to ninth aspects of the invention, wherein the adhesive application device further comprises a heating mechanism for the adhesive.

An eleventh aspect of the invention of the present application is directed to an apparatus for producing a laminated steel core, the apparatus comprising a plurality of adhesive application devices that are integrated into a single process and are configured to independently apply an adhesive to a thin steel strip, and a plurality of dies that are integrated into a single process and are configured to punch the adhesive-applied thin steel strip into a predetermined shape.

A twelfth aspect of the invention of the present application is directed to the apparatus for producing a laminated steel core according to the eleventh aspect of the invention, wherein steel core sheets punched out from the thin steel strip to which the adhesive has been applied in accordance with the dies used in the single process have different lamination thicknesses.

A thirteenth aspect of the invention of the present application is directed to a method for producing of a laminated steel core, wherein the method is performed using an apparatus comprising a plurality of adhesive application devices that are integrated into a single process and are configured to independently apply an adhesive to a thin steel strip, and a plurality of dies that are configured to punch the adhesive-applied thin steel strip into a predetermined shape, and wherein the method comprises
applying an adhesive to a thin steel strip using one of the plurality of adhesive application devices,
punching the adhesive-applied thin steel strip by the dies to produce steel core sheets having a predetermined shape, and
stacking the steel core sheets.

### ADVANTAGEOUS EFFECTS OF INVENTION

According to the first, second, third and fourth aspects of the invention, a plurality of adhesive application devices are integrated into a single process, which results in miniaturization of the apparatus. A necessary and sufficient amount of the adhesive is applied to the thin steel strip by switching the plurality of adhesive application devices as needed. According to the fifth aspect of the invention, even when an error occurs in the height of the elevated adhesive application devices, a necessary and sufficient amount of the adhesive is applied to the thin steel strip. According to the sixth aspect of the invention, the dies can be made smaller in size than conventional dies having an adhesive application device therein, and maintenance of the apparatus can easily be performed. An adhesive supply unit can be disposed near the adhesive application devices, and consequently adhesive flow passages may be shorter and the response time to an operator's request to supply the adhesive or stop the supply of the adhesive may be shortened, thereby reducing the amount of the adhesive wasted. According to the seventh aspect of the invention, a necessary and sufficient amount of the adhesive is applied to the thin steel strip by stopping and/or restarting the application of the adhesive to the thin steel strip by means of any one of the plurality of adhesive application devices that are integrated in a single process. The eighth aspect of the invention makes it easier to perform appropriate maintenance on the apparatus. According to the ninth aspect of the invention, the sensor ensures the proper application of the adhesive to the thin steel strip, and if the adhesive application devices fail to apply a necessary amount of the adhesive to the thin steel strip, the operator can carry out appropriate procedures. According to the tenth aspect of the invention, the fluidity of the adhesive is increased and the adhesive can easily be applied to the thin steel strip. According to the eleventh, twelfth and thirteenth aspects of the invention, even when the application of the adhesive to the thin steel strip by means of the adhesive application devices is stopped and/or restarted in accordance with the dies used in the single process, stable application of the adhesive to the thin steel strip is ensured, and the productivity of the laminated steel core is improved.

### BRIEF DESCRIPTION OF DRAWINGS

Fig. 1 is a schematic configuration diagram of an embodiment of an apparatus for producing a laminated steel core comprising an adhesive application device of the present invention and other devices placed in-line before and after the adhesive application device.
Fig. 2 is a perspective view of an embodiment of the adhesive application device of the present invention.
Fig. 3 is a plan view of an embodiment of the adhesive application device of the present invention.
Fig. 4 is a side view of an embodiment of the adhesive application device of the present invention.

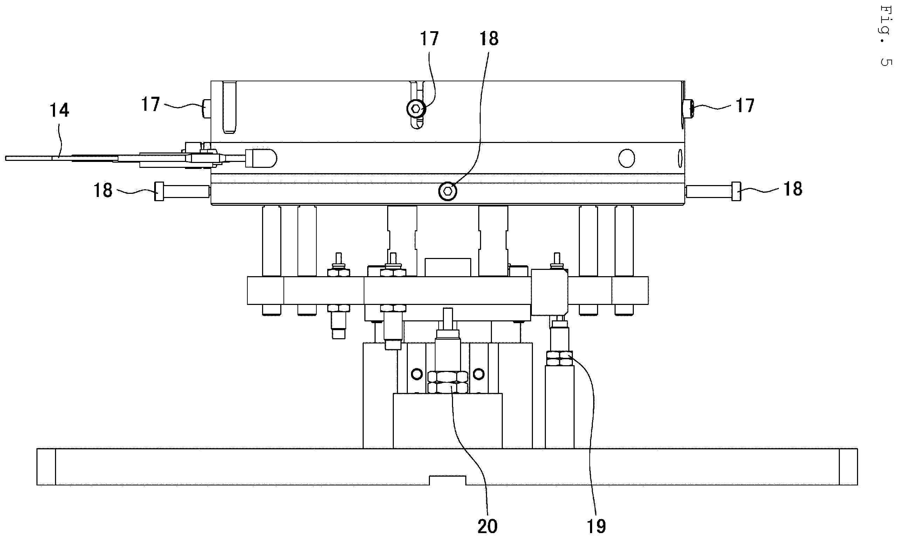

Fig. 5 is a side view of Fig. 4 after removing some of the components.
Fig. 6 is a front view of an embodiment of the adhesive application device of the present invention.

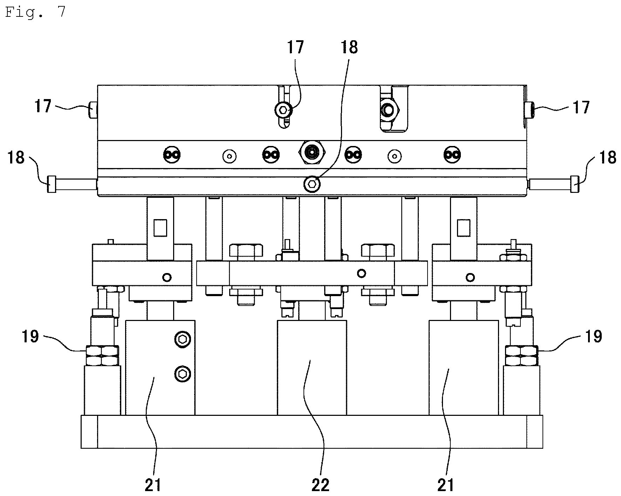

Fig. 7 is a front view of Fig. 6 after removing some of the components.
Fig. 8 is a plan view of an embodiment of adhesive flow passages in the adhesive application device of the present invention.
Fig. 9 is a plan view of another embodiment of adhesive flow passages in the adhesive application device of the present invention.
Fig. 10 is a diagrammatic layout of an apparatus for producing a laminated steel core as disclosed in Patent literature 1.
Fig. 11 is a perspective view of a laminated steel core as disclosed in Patent literature 1.
Fig. 12 is a plan view of an adhesive application device as disclosed in Patent literature 1.
Fig. 13 is a diagrammatic layout of a production process using an apparatus for producing a motor as disclosed in Patent literature 2, when rotor cores and stator cores are laminated not by interlocking but by adhesion bonding.
Fig. 14 is a diagrammatic layout of an apparatus for producing a laminated steel core as disclosed in Patent literature 3.

### DESCRIPTION OF EMBODIMENTS

Embodiments of the present invention will be described below with reference to the attached drawings. Various alterations and modifications are possible within the technical scope of the present invention.

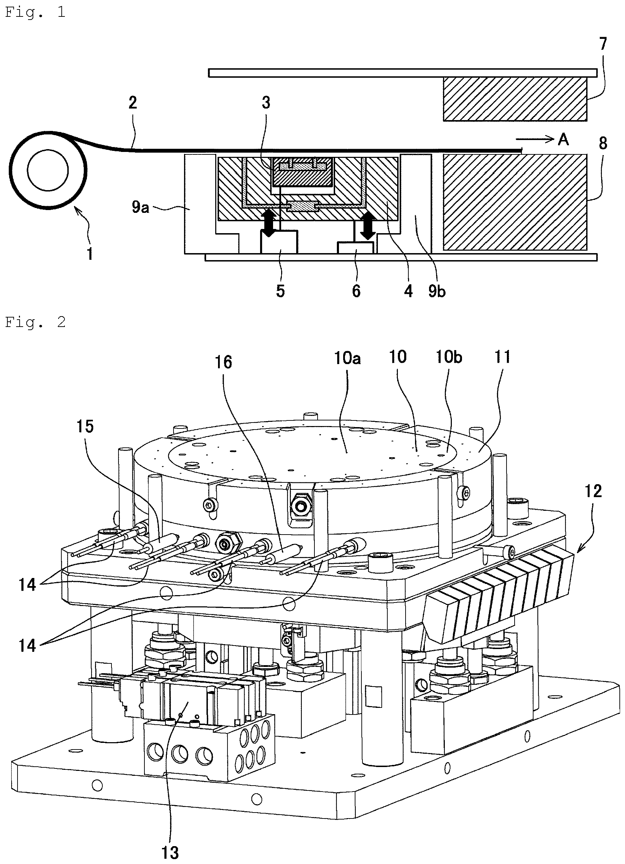

Fig. 1 is a schematic configuration diagram of an embodiment of an apparatus for producing a laminated steel core comprising the adhesive application device of the present invention and other devices placed in-line before and after the adhesive application device. In the figure, the numeral 1 denotes a coil of a wound thin steel strip 2. The numeral 3 denotes an inner adhesive application device. The numeral 4 denotes an outer adhesive application device. The numeral 5 denotes an elevating and lowering mechanism configured to elevate and lower the inner adhesive application device. The numeral 6 denotes an elevating and lowering mechanism configured to elevate and lower the outer adhesive application device. The numeral 7 denotes an upper die, and the numeral 8 denotes a lower die. The inner and outer adhesive application devices 3, 4 are configured to be independently elevated and lowered by the elevating and lowering mechanisms 5, 6, respectively. The inner and outer adhesive application devices 3, 4 are located immediately before the upper and lower dies as shown in Fig. 1. The thin steel strip 2 is drawn from the coil 1, and an adhesive is applied to the lower surface of the thin steel strip 2 using the inner and outer adhesive application devices 3, 4. The thin steel strip 2 is then punched by the upper and lower dies 7, 8 and optionally subsequent upper and lower dies to create a predetermined shape, and transferred in the direction indicated by the arrow A.

Fig. 2 is a perspective view of an embodiment of the adhesive application device of the present invention. In the figure, the numeral 10 denotes an adhesive application zone of the inner adhesive application device 3, in which dispense nozzles are annularly arranged. The numeral 11 denotes an adhesive application zone of the outer adhesive application device 4, in which dispense nozzles are annularly arranged. The adhesive application zone 10 in which the dispense nozzles are annularly arranged is configured to be elevated and lowered together with a central circular area 10a and an outer annular area 10b of the inner adhesive application device 3 by one of the elevating and lowering mechanisms (described in detail later). The adhesive application zone 11 in which the dispense nozzles are annularly arranged is configured to be elevated and lowered by another elevating and lowering mechanism. The numeral 12 denotes a plurality of laser sensors for sensing the application of the adhesive to the thin steel strip. The numeral 13 denotes an electromagnetic valve for controlling the elevating and lowering movement of the elevating and lowering mechanisms configured to elevate and lower the inner and outer adhesive application devices. The numeral 14 denotes cartridge heaters for increasing the temperature of the adhesive. The numeral 15 denotes a temperature sensor for sensing the temperature of the inner adhesive application device 3 comprising the adhesive application zone 10 in which the dispense nozzles are annularly arranged and the central circular area 10a and the outer annular area 10b. The numeral 16 denotes a temperature sensor for sensing the temperature of the outer adhesive application device 4 comprising the adhesive application zone 11 in which the dispense nozzles are annularly arranged.

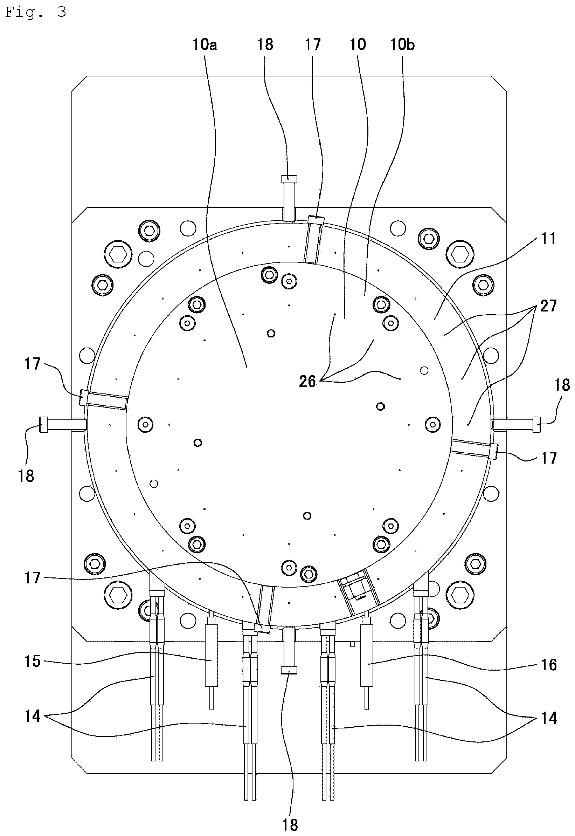

Fig. 3 is a plan view of an embodiment of the adhesive application device of the present invention. The numeral 17 denotes supply ports for supplying the adhesive to the adhesive application zone 10 of the inner adhesive application device 3, in which the dispense nozzles are annularly arranged. The numeral 18 denotes supply ports for supplying the adhesive to the adhesive application zone 11 of the outer adhesive application device 4, in which the dispense nozzles are annularly arranged. The supply ports 17, 18 are detachable.

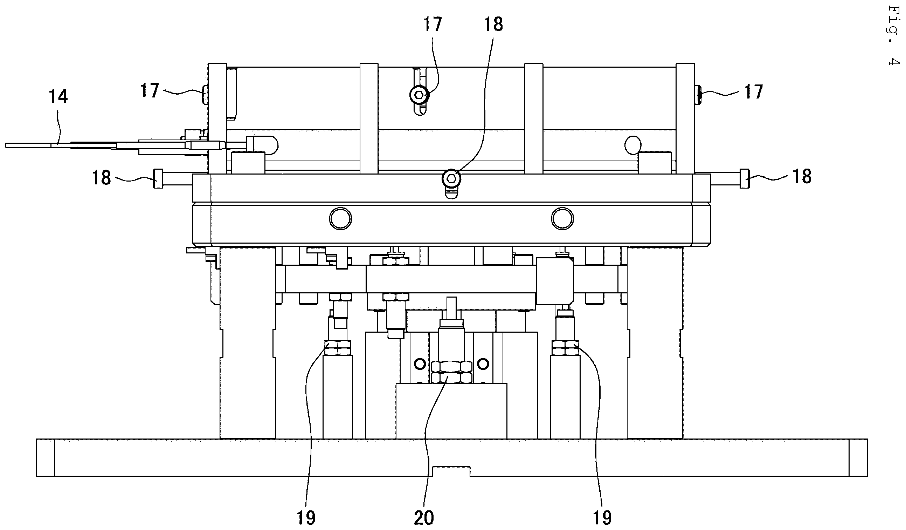

Fig. 4 is a side view of an embodiment of the adhesive application device of the present invention. The numeral 19 denotes shock absorbers for attenuating the impact of the elevating and lowering movement of the outer adhesive application device 4 comprising the adhesive application zone 11 in which the dispense nozzles are annularly arranged. The numeral 20 denotes shock absorbers for attenuating the impact of the elevating and lowering movement of the inner adhesive application device 3 comprising the adhesive application zone 10 in which the dispense nozzles are annularly arranged and the central circular area 10a and the outer annular area 10b.

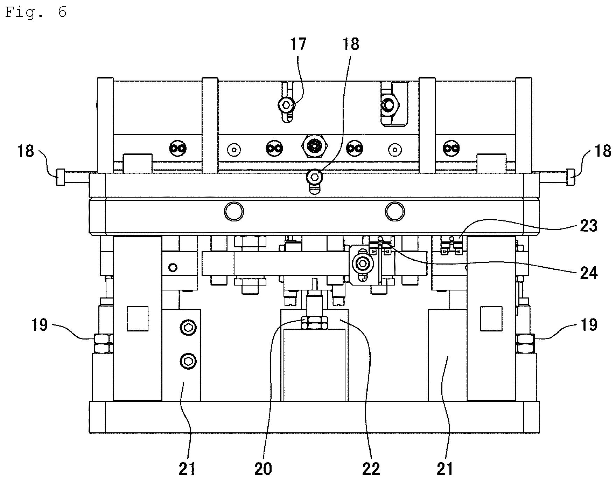

Fig. 6 is a front view of an embodiment of the adhesive application device of the present invention. The numeral 21 denotes air cylinders for elevating and lowering the outer adhesive application device 4 comprising the adhesive application zone 11 in which the dispense nozzles are annularly arranged. The numeral 22 denotes an air cylinder for elevating and lowering the inner adhesive application device 3 comprising the adhesive application zone 10 in which the dispense nozzles are annularly arranged and the central circular area 10a and the outer annular area 10b. The numeral 23 denotes a photomicrosensor for sensing the upper and lower limits of the movement of the air cylinders 21. The numeral 24 denotes a photomicrosensor for sensing the upper and lower limits of the movement of the air cylinder 22. The adhesive application device is provided with more than one air cylinder 21 and more than one air cylinder 22.

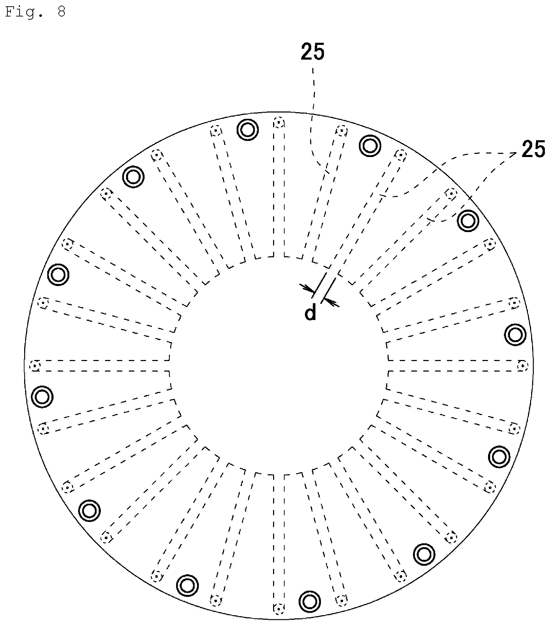

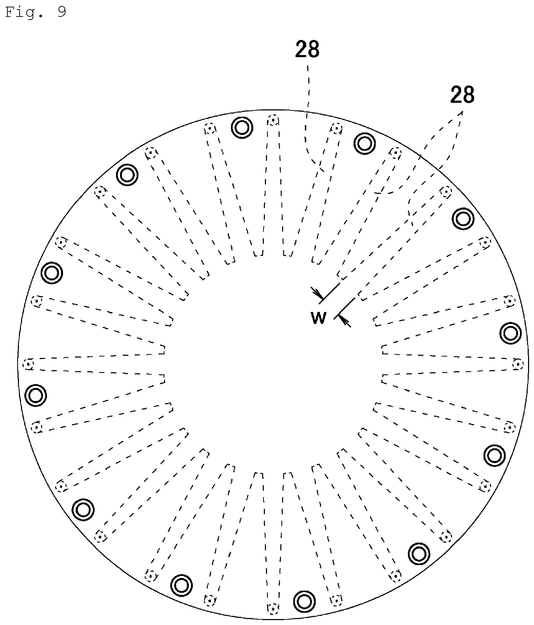

Fig. 8 is a plan view of an embodiment of adhesive flow passages in the adhesive application device of the present invention. The width d of the flow passages 25 in this embodiment is constant along its entire length. The adhesive is supplied through the flow passages 25, and dispensed from dispense nozzles 26, 27 on the adhesive application zones 10, 11 in which the dispense nozzles are annularly arranged as shown in Fig. 3. Fig. 9 is a plan view of another embodiment of adhesive flow passages in the adhesive application device of the present invention. The width w of the flow passages 28 in this embodiment is tapered toward the outlets of the flow passages 28. When the length of the flow passages is relatively long, such tapered flow passages are advantageous in that the adhesive can be easily delivered to the outlets of the flow passages. In Figs. 1 to 3, the adhesive application zones 10, 11 in which the dispense nozzles are annularly arranged (on the top surfaces of the adhesive application devices) are positioned slightly lower than the top surface of the lower die 8. Such adhesive application zones 10, 11 positioned to be recessed from the top surface of the lower die 8 are advantageous in that the adhesive dispensed from the dispense nozzles 26, 27 is not immediately applied to the lower surface of the thin steel strip (indicated by the numeral 2 in Fig. 1), but the adhesive rising on the dispense nozzles 26, 27 is applied to the lower surface of the thin steel strip so that the amount of the adhesive applied is constant.

A method for applying an adhesive to a thin steel strip using the adhesive application device configured as described above will be described below.

The adhesive is not continuously applied to the thin steel strip 2, but is rather applied to the thin steel strip 2 in synchronization with the timing of punching the thin steel strip 2 into a predetermined shape by lowering the upper die 7 toward the lower die 8 in the configuration as shown Fig. 1. In particular, when referring to Fig. 1, at the timing when punching is not performed, a predetermined distance (about several millimeters) is provided between the thin steel strip 2 and the components of the apparatus for producing a laminated steel core, including the top surface of the inner adhesive application device 3, the top surface of the outer adhesive application device 4, the top surfaces of platforms 9a, 9b and the top surface of the lower die 8. In the configuration shown in the figure, at the timing when the upper die 7 is lowered toward the lower die 8 to punch the thin steel strip 2 into a predetermined shape, the thin steel strip 2 is pressed against the lower die 8. Since the inner and outer adhesive application devices 3, 4 are configured to be independently elevated and lowered, the inner and outer adhesive application devices 3, 4 can independently be elevated to a height at which the top surfaces of the inner and outer adhesive application devices are positioned slightly lower than the lower surface of the thin steel strip 2. The adhesive stored in a tank (not shown) is constantly supplied to the inner and outer adhesive application devices 3, 4 at a predetermined pressure, and is applied to the lower surface of the thin steel strip 2.

After the adhesive is applied to the lower surface of the thin steel strip 2 as described above, the thin steel strip 2 is punched by the upper and lower dies 7, 8 and optionally subsequent upper and lower dies into a predetermined shape to produce steel core sheets. The steel core sheets having a predetermined shape are stacked on top of one another within the lower die 8 or an optionally subsequent lower die. After the stacked core sheets reach a predetermined number, the stacked core sheets are dispensed from the lower die 8 or an optionally subsequent lower die. The stacked core sheets are subjected to a given post-treatment such as heating, and used for the assembly of electric parts . For example, when referring to Fig. 1, at the timing of punching the thin steel strip 2 into a predetermined shape by lowering the upper die 7 toward the lower die 8, only the inner adhesive application device 3 is elevated toward the lower surface of the thin steel strip 2 to apply the adhesive to the lower surface of the thin steel strip 2. The adhesive-applied thin steel strip 2 is punched by the upper and lower dies 7, 8 into a predetermined shape to produce a steel core sheet. The steel core sheet is stacked on another steel core sheet within the lower die 8. Then, at the timing of punching the thin steel strip 2 into a predetermined shape by lowering an optionally subsequent upper die toward an optionally subsequent lower die, only the outer adhesive application device 4 is elevated toward the lower surface of the thin steel strip 2 to apply the adhesive to the lower surface of the thin steel strip 2. The adhesive-applied thin steel strip 2 is punched by the subsequent upper and lower dies into a predetermined shape to produce a steel core sheet. The steel core sheet is stacked on another steel core sheet within the lower die.

The adhesive is supplied from a tank (not shown) at a predetermined pressure toward the inner and outer adhesive application devices 3, 4 as described above, and reaches the supply ports 17, 18 as shown in Fig. 3. The adhesive is then dispensed from the dispense nozzles 26 of the adhesive application zone 10 in which the dispense nozzles are annularly arranged and from the dispense nozzles 27 of the adhesive application zone 11 in which the dispense nozzles are annularly arranged, and is applied to the lower surface of the thin steel strip. The adhesive application zone 10 in which the dispense nozzles are annularly arranged is configured to be elevated and lowered together with the central circular area 10a and the outer annular area 10b by one of the elevating and lowering mechanisms (described in detail later). The adhesive application zone 11 in which the dispense nozzles are annularly arranged is configured to be elevated and lowered by another elevating and lowering mechanism. In this manner, the inner and outer adhesive application devices 3, 4 are integrated into a single apparatus, and the inner and outer adhesive application devices may be configured to be independently elevated and lowered. Due to this configuration, miniaturization of the adhesive application devices, the dies and the apparatus for producing a laminated steel core can be achieved and the configuration of the apparatus can be simplified, which may lead to a significant reduction in the equipment cost, as compared with the conventional apparatus for producing a laminated steel core as shown in Fig. 13.

Specifically, in the inner adhesive application device 3, the adhesive application zone 10 in which the dispense nozzles are annularly arranged is configured to be elevated and lowered together with the central circular area 10a and the outer annular area 10b by the air cylinder 22 as shown in Fig. 6. In the outer adhesive application device 4, the adhesive application zone 11 in which the dispense nozzles are annularly arranged is configured to be elevated and lowered by the air cylinders 21 as shown in Fig. 6.

When a laminated core as shown in Fig. 11 is intended to be produced, a necessary and sufficient amount of the adhesive is applied to the lower surface of the thin steel strip by switching the plurality of adhesive application devices as needed. The present invention can be used to produce not only a concentric laminated core but also a laminated core that is partitioned in the circumferential direction or other types of laminated cores.

The movement of the air cylinders 21, 22 is controlled by the electromagnetic valve 13 as shown in Fig. 2. The upper and lower limits of the elevating and lowering movement of the air cylinders are sensed by the photomicrosensors 23, 24 as shown in Fig. 6. The shock absorbers 19, 20 as shown in Fig. 4 attenuate the impact of the elevating and lowering movement on the components of the apparatus and shorten a waiting time until the vibration by the impact stops.

The adhesive application device of the invention comprises the plurality of laser sensors 12 for sensing the application of the adhesive to the thin steel strip as shown in Fig. 2. When the laser sensors 12 detect that the adhesive application device has failed to apply the adhesive to the thin steel strip, this information detected by the laser sensors 12 is sent as a feedback to the tank (not shown) storing the adhesive, and supply of the adhesive to the inner and outer adhesive application devices 3, 4 is stopped to allow the operator to carry out necessary procedures such as inspection and repair.

Referring back to Fig. 2, the cartridge heaters 14 for increasing the temperature of the adhesive are coupled to a power supply (not shown). By heating the adhesive with the cartridge heaters 14, the fluidity of the adhesive can be increased and the adhesive can be stably dispensed from the dispense nozzles 26, 27 as shown in Fig. 3. The temperature sensors 15, 16 can sense an abnormal rise in the temperature in the apparatuses, and based on the detected temperature, the number of the cartridge heaters 14 in operation can be adjusted as needed. Since the inner and outer adhesive application devices 3, 4 are located outside the upper and lower dies 7, 8, the temperature rise by the cartridge heaters 14 has no influence on the dies, and simultaneously, temperature changes in the dies have no influence on the fluidity of the adhesive.

### INDUSTRIAL APPLICABILITY

The adhesive application device of the present invention can be used to apply an adhesive to a thin steel strip for the production of laminated steel cores for stepper motors or motor cores.

### REFERENCE SIGNS LIST

1 Coil
2 Thin steel strip
3 Inner adhesive application device
4 Outer adhesive application device
5 Elevating and lowering mechanism for inner adhesive application device
6 Elevating and lowering mechanism for outer adhesive application device
7 Upper die
8 Lower die
9a, 9b Platforms
10 Adhesive application zone in which dispense nozzles are annularly arranged
10a Central circular area
10b Outer annular area
11 Adhesive application zone in which dispense nozzles are annularly arranged
12 Laser sensors
13 Electromagnetic valve
14 Cartridge heaters
15, 16 Temperature sensors
17, 18 Adhesive supply ports
19, 20 Shock absorbers
21, 22 Air cylinders
23, 24 Photomicrosensors
25, 28 Flow passages
26, 27 Dispense nozzles

## Claims

1. An adhesive application device comprising a plurality of adhesive application devices that are integrated into a single process, wherein the plurality of adhesive application devices are configured to independently apply an adhesive to different locations on the same surface of a thin steel strip at the same or different timings.

2. The adhesive application device according to claim 1, wherein the plurality of adhesive application devices comprise an inner adhesive application device and an outer adhesive application device, and wherein the outer adhesive application device is arranged to surround the inner adhesive application device.

3. The adhesive application device according to claim 1, further comprising an elevating and lowering mechanism configured to elevate and lower the plurality of adhesive application devices independently.

4. The adhesive application device according to claim 2, further comprising an elevating and lowering mechanism configured to elevate and lower the inner and outer adhesive application devices independently.

5. The adhesive application device according to any one of claims 1 to 4, wherein the adhesive application devices are located immediately before a die for punching the thin steel strip into a predetermined shape.

6. The adhesive application device according to any one of claims 3 to 5, further comprising a shock absorber for attenuating the impact of the elevating and lowering movement of the adhesive application devices.

7. The adhesive application device according to any one of claims 1 to 6, further comprising a sensor for sensing the application of the adhesive to the thin steel strip.

8. The adhesive application device according to any one of claims 1 to 7, further comprising a heating mechanism for the adhesive.

9. An apparatus for producing a laminated steel core, the apparatus comprising a plurality of adhesive application devices for applying an adhesive to a thin steel strip, and a plurality of dies for punching the adhesive-applied thin steel strip into different shapes, wherein the plurality of adhesive application devices are configured to independently apply the adhesive to different locations on the same surface of the thin steel strip at the same or different timings.

10. A method for producing a laminated steel core, the method comprising
applying an adhesive to a thin steel strip using one of a plurality of adhesive application devices configured to independently apply the adhesive to different locations on the same surface of the thin steel strip at the same or different timings,
punching the adhesive-applied thin steel strip by dies to produce steel core sheets having a predetermined shape and stacking the steel core sheets,
applying the adhesive to the thin steel strip using another one of the plurality of adhesive application devices, and
punching the adhesive-applied thin steel strip by dies to produce steel core sheets having a different predetermined shape and stacking the steel core sheets.
